Europäisches Patentamt

European Patent Office

Office européen des brevets

(11) Veröffentlichungsnummer: **0 046 855**
**A1**

## (12) EUROPÄISCHE PATENTANMELDUNG

(21) Anmeldenummer: **81105425.3**

(22) Anmeldetag: **11.07.81**

(51) Int. Cl.³: **A 01 G 1/00**
**C 09 K 17/00**

(30) Priorität: **30.08.80 DE 3032711**

(43) Veröffentlichungstag der Anmeldung:
**10.03.82 Patentblatt 82/10**

(84) Benannte Vertragsstaaten:
**BE DE FR GB IT NL SE**

(71) Anmelder: **DYNAMIT NOBEL AKTIENGESELLSCHAFT**
**Patentabteilung Postfach 1209**
**D-5210 Troisdorf, Bez. Köln(DE)**

(72) Erfinder: **Tiroux, Josef**
**Im Zehntfeld 6**
**D-5210 Troisdorf 14(DE)**

(72) Erfinder: **Weissenfels, Franz, Dr.**
**Im Grafenkreuz 17**
**D-5200 Siegburg(DE)**

(54) **Kulturböden mit Schaumstoff-Bruchstücken.**

(57) Die vorliegende Erfindung hat zum Ziel, das Wachstum von Pflanzen auf Kulturböden zu verbessern. Insbesondere soll der Wasser- und Lufthaushalt von Kulturböden verbessert werden. Dieses Ziel wird dadurch erreicht, daß den Kulturböden Bruchstücke definierter Phenolharzschäume untergemischt werden. Die Korngrößen dieser Bruchstücke sollen zwischen 1 und 60 mm liegen und den Böden in Mengen bis zu 1000 Vol.-% untergemischt werden. Auch die durch die beanspruchten Maßnahmen erhaltenen Kulturböden fallen unter die vorliegende Erfindung.

EP 0 046 855 A1

-1-

Troisdorf, den 25. Aug. 1980
OZ: 80050 (3049) Dr.Sk/Ce

DYNAMIT NOBEL AKTIENGESELLSCHAFT
Troisdorf, Bez. Köln

Kulturböden mit Schaumstoff-Bruchstücken

Die vorliegende Erfindung befaßt sich mit der Verbesserung des Luft- und Wasserhaushaltes von Kulturböden mit Hilfe von leichten und saugfähigen Substanzen.

Es ist bekannt, Kulturböden durch Zusatz von leichten und saugfähigen Stoffen in der Weise zu verbessern, daß die Wurzeln der darauf wachsenden Pflanzen besser mit Wasser und Luft versorgt werden. Bei diesen bodenverbessernden Substanzen handelt es sich sowohl um natürlich vorkommende Materialien, wie z.B. Torf oder auch um synthetisch hergestellte Stoffe, wie z.B. Harnstoff-Formaldehydschäume.

Diese bekannten Zusätze zu Kulturböden nehmen das ihnen angebotene Wasser innerhalb einer bestimmten Zeit auf, wo-bei diese Wasseraufnahmegeschwindigkeit für manche Anwen-dungszwecke nicht schnell genug ist, so daß z.B. bei einem sommerlichen Gewitterregen (Platzregen) das Wasser schnell in tiefere Erdschichten versickert und nicht von dem Kulturboden aufgesaugt und der Pflanze zur Verfügung gestellt werden kann. Dies gilt besonders für stark sandhaltige Kulturböden. Die Zusatzstoffe zu Kulturböden sollen jedoch nicht nur eine schnelle Wasseraufnahmefähigkeit besitzen, sondern auch eine hohe Wasserkapazität, die es ermöglicht, daß die Pflanzen über einen längeren Zeitraum hinweg sich mit dem gespeicherten Wasser versorgen können. Wasseraufnahmegeschwindigkeit und Wasserkapazität bestimmen wesentlich den Wasserhaushalt von Kulturböden.

Weiterhin haben die Zuschlagstoffe die Aufgabe, den Kulturboden aufzulockern. Dadurch wird es ermöglicht, daß den Wurzeln der Pflanzen genügend Sauerstoff zur Verfügung steht, der für das Wachstum ebenfalls notwendig ist. Es bestand demzufolge die Aufgabe, Substanzen zu finden, die die Wasseraufnahmegeschwindigkeit von Kulturböden verbessern, die gleichzeitig aber auch eine hohe Wasserkapazität und eine geringe Dichte besitzen. Weiterhin sollen diese Substanzen aber auch das Wachstum der Pflanze nicht behindern und physiologisch unschädlich sein.

In Erfüllung dieser Aufgabe wurde nur gefunden, daß sich Phenolharzschäume mit einem Anteil an offenen Poren von mehr als 80 %, einem durchschnittlichen Zellendurchmesser zwischen 0,15 und 0,5 mm und einer Dichte zwischen 9 und 25 kg/m$^2$ als Zuschlagmittel zur Verbesserung des Wasser- und Lufthaushalts von Kulturböden eignen. Die vorliegende Erfindung behandelt demzufolge auch Kulturböden, die durch einen Gehalt an Bruchstücken von offenporigen Phenolharzschäumen, die eine Dichte zwischen 9 und 25 kg/m$^2$, einen Anteil an offenen Poren von mehr als 80 Vol.-% und einen durchschnittlichen Zellendurchmesser zwischen 0,15 und 0,5 mm besitzen, gekennzeichnet sind.

Es wurde weiterhin festgestellt, daß auf den erfindungsgemäßen Böden Kulturpflanzen in gleich guter und manchmal noch besserer Weise wachsen und gedeihen als auf solchen Böden, die durch Zusatz an sich bekannter Stoffe hinsichtlich ihres Wasser- und Lufthaushalts verbessert wurden. Der Zusatz der Schaumstoffgranulate ist offensichtlich nicht nur pflanzenunschädlich, sondern auch noch wachstumsfördernd.

Die zur Bodenverbesserung einzusetzenden Phenolharzschäume sind an sich bekannte Substanzen. Sie werden in an sich bekannter Weise durch Aufschäumen von Phenolresolharzen in Gegenwart eines Härters unter Verwendung von niedrig siedenden Stoffen als Treibmittel hergestellt. Die gewünschte Offenporigkeit und der Zellendurchmesser ergeben sich aus der Zusammensetzung des Harzes und der gegebenenfalls darin befindlichen oberflächenaktiven Substanzen, die als Porenregulatoren wirken (vgl. DE-PS 12 36 183). Die notwendige Dichte des Schaums läßt sich ebenfalls in bekannter Weise z.B. durch Variation der Menge des Treibmittels erzielen. Harze, die beim Aufschäumen die Schaumstoffe mit den gewünschten Eigenschaften ergeben, sind bereits im Handel erhältlich (z.B. Phenolharz T 910 der Dynamit Nobel AG, Troisdorf). Solchen Harzen werden gegebenenfalls zur Erzielung der gewünschten Zelleneigenschaften die bereits oben erwähnten Porenregulatoren hinzugefügt.

Unter Kulturböden sollen erfindungsgemäß alle Böden verstanden werden, auf denen Kulturpflanzen angepflanzt werden können und die ein Wachstum dieser Pflanzen ermöglichen. Die Zusammensetzung dieser Böden kann in weiten Grenzen schwanken: Sie können infolge hohen Anteils an Sanden leicht wasserdurchlässig oder infolge hohen Anteils an Ton zwar eine hohe Wasserkapazität aber eine geringe Wasseraufnahmegeschwindigkeit besitzen.

Je nach Zusammensetzung dieser Kulturböden kann die Menge des zuzusetzenden Phenolharzschaumes auch weitgehend variiert werden. Es ist durchaus möglich, schlechten Kulturböden erfindungsgemäß bis zu 1000 Vol.-% an Phenolharzschäumen hinzuzufügen und damit Kulturböden erhalten, auf denen Kulturpflanzen gut gedeihen.

Der Phenolharzschaum wird den Kulturböden in Form von Bruchstücken untergemischt. Diese Bruchstücke haben Korngrößen zwischen 1 und 60 mm, vorzugsweise zwischen 4 und 40 mm. Die Herstellung dieser Bruchstücke erfolgt auf an sich bekannte Weise durch mechanisches Zerkleinern von Schaumstoffblöcken.

Phenolharzschäume mit den in dem kennzeichnenden Teil des vorliegenden Anspruchs genannten Eigenschaften besitzen weiterhin eine Wasseraufnahmegeschwindigkeit von weniger als 10 Minuten pro Liter Schaumvolumen. Dies bedeutet, daß 1 Liter Schaumstoff sich innerhalb von 10 Minuten mit Wasser vollsaugt. Die Menge des Wassers, das dabei aufgesaugt wird, beträgt mindestens 75 Vol.-% des Schaumstoffs.

Wenn der Phenolharzschaum die bevorzugte Dichtewerte zwischen 10 und 21 kg/m$^3$ und einen bevorzugten Anteil an offenen Poren zwischen 83 und 95 Vol.-% besitzt und der Zellendurchmesser in dem bevorzugten Bereich zwischen 0,2 und 0,4 mm liegt, dann liegen die Werte für die Wasseraufnahmegeschwindigkeit und die Wasseraufnahmefähigkeit ebenfalls in einem besonders günstigen Bereich; sie können dann bis zu 0,5 Min/l Schaumvolumen (für die Aufnahmegeschwindigkeit) und bis zu 95 Vol.-% (für die Wasseraufnahmefähigkeit) betragen.

Der Anteil an offenen Poren in den erfindungsgemäß eingesetzten Phenolharzschäumen wird in an sich bekannter Weise

- 5 -

mit dem Beckmann-Luftvergleichs-Pyknometer bestimmt. Der durchschnittliche Zellendurchmesser wird mit Hilfe von Raster-Elektronenmikroskopaufnahmen bestimmt. Die Ermittlung der Dichte erfolgt mit Prüfkörpern, die während 24 Stunden bei 80 $^{\circ}$C in einem Umluftwärmeschrank betrocknet werden.

Die Wasseraufnahmefähigkeit und die Wasseraufnahmegeschwindigkeit werden gemeinsam folgendermaßen bestimmt: Ein zylinderförmiger Schaumstoffprüfkörper von 50 mm Durchmesser und 65 mm Länge wird auf eine Wasseroberfläche von destilliertem Wasser (t = 20 $^{\circ}$C) aufgelegt und die Zeit gemessen, in der sich dieser Prüfkörper mit Wasser vollsaugt, so daß er total benetzt erscheint. Anschließend wird die aufgenommene Wassermenge durch Differenzwägung bestimmt.

Für manche Anwendungszwecke ist es von Vorteil, die an dem Schaumstoff von dessen Herstellung her anhaftenden Säurespuren noch vor dem Untermischen in die Erde zu beseitigen. Dies ist dann besonders empfehlenswert, wenn auf dem Kulturboden solche Pflanzen gezüchtet werden sollen, die saure Böden nicht vertragen. Zu diesem Zweck wird der Schaumstoff vor dem Vermischen mit der Erde mit gasförmigem Ammoniak oder mit wässrigen Lösungen oder Dispersionen basisch wirkender Verbindungen behandelt.

Diese Behandlung kann sowohl mit den bei der Produktion anfallenden Schaumstoffblöcken als auch mit den unterzumischenden Schaumstoff-Bruchstücken erfolgen. Bei Verwendung von $NH_3$-Gas sind für eine weitgehende Neutralisierung der Schaumstoffoberfläche etwa 2,0 g $NH_3$/kg notwendig. Bei Verwendung von basisch wirkenden Lösungen werden äquivalente Mengen eingesetzt. Als basisch wirkende Lösungen eignen sich unter anderem solche von Ammoniumsalzen oder wässrige Lösungen oder Dispersionen von Ca(OH)$_2$, CaO, Ca(HCO$_3$)$_2$, KHCO$_3$, Mg(HCO$_3$)$_2$.

Es ist weiterhin empfehlenswert, nach einer solchen Behandlung den Schaumstoff, gegebenenfalls bereits im Gemisch mit der Erde, auf Temperaturen bis zu 100 °C zu erhitzen. Eine solche Behandlung zerstört in keiner Weise die Porigkeit des Schaums, so daß die Wasseraufnahmefähigkeit voll erhalten bleibt.

Die erfindungsgemäße Verwendung von dem beschriebenen Phenolharzschaum hat gegenüber dem Zusatz von natürlichen Zusatzstoffen (z.B. Torf) den Vorteil, daß über diesen Zusatzstoff weder Pflanzenschädlinge noch Krankheitserreger oder Unkrautsamen in den Kulturboden gelangen.

Beispiel 1
Herstellung von Phenolharzschäumen
1. Schaum A
Es wurden 100 kg eines im Handel befindlichen schäumfähigen Phenolresolharzes (Handelsprodukt T 910 der Dynamit Nobel AG, Troisdorf) in einem Mischgefäß vorgelegt, anschließend 1,4 kg eines Gemisches von oberflächenaktiven Substanzen als Porenregulator (im Handel unter der Bezeichnung T 950 der Dynamit Nobel AG, Troisdorf erhältlich) untergemischt. Während des Mischvorgangs wurden 4,6 l Wasser hinzugefügt und sobald die Lösung homogen war, wurden 12,0 l n-Pentan unter weiterem Rühren hinzugegeben. Sobald die Lösung völlig homogen war, wurden 3,6 l einer 65 %igen wässrigen p-Phenolsulfonsäure-lösung so lange untergerührt, bis die Mischung eine Temperatur von 28 bis 29 °C aufwies. Daraufhin wurde sie in eine innen mit Polyäthylenfolie oder Papier ausgekleidete Holzform von 207 cm Länge, 107 cm Breite und 141 cm Höhe luftblasenfrei gegossen. Diese Form wurde daraufhin in eine Umluftwärmekammer mit einer Lufttemperatur von 44 bis 55 °C geschoben, wo inner-

- 7 -

halb von 60 bis 90 min. der Schäum- und Härtevorgang ablief. Anschließend wurde der erhaltene Schaumstoffblock entformt.

2. Schaum B

In gleicher Weise wie der Schaum A wurde ein Schaum B hergestellt, bei dem 100 kg des gleichen Phenolresolharzes mit 1,35 kg des Porenregulators, 4,6 l Wasser, 14,0 l n-Pentan und 3,2 l der 65 %igen wässrigen p-Phenolsulfonsäurelösung vermischt wurden.

Die erhaltenen Schäume A und B hatten folgende Eigenschaften

|  | Schaum A | Schaum B |
|---|---|---|
| Dichte $(kg/m^3)$ | 20,4 | 13,9 |
| Anteil an offenen Poren (%) | 86 | 92 |
| Wasseraufnahmefähigkeit (Vol.-%) | 81 | 92 |
| pH-Wert des Eluats | 3,8 | 4,3 |

Für die folgenden Beispiele wurden die Schaumstoffblöcke mit Hilfe einer Rübenschneidmaschine zu einem Granulat zerkleinert, das ein Schüttgewicht von 17 $kg/m^3$ und dessen Teilchen Korngrößen zwischen 5 und 30 mm besaßen.

Beispiel 2

Das gemäß Beispiel 1 erhaltene Granulat aus den Schäumen A und B wurde mit Einheitserde im Volumenverhältnis 1:1 bzw. 1:3 von Hand vermischt. Die Gemische wurden in Rundtöpfe vom Innendurchmesser 19 cm und einer Höhe von 25 cm mit Böden aus Drahtgeweben (Maschenweite 2 mm) gefüllt. Zur Vermeidung von Hohlräumen in den Gemischen wurden die Töpfe 8 Mal von Hand auf eine feste Unterlage aufgestoßen.

Zum Vergleich wurde eine reine Einheitserde und Mischungen von Einheitserde mit Torf bzw. einem im Handel zur Boden-verbesserung erhältlichen Harnstoff-Schaumharz im gleichen Volumenverhältnis in Töpfe gleicher Art in gleicher Weise eingefüllt.

Alle Mischungen nahmen das gleiche Volumen (ca. 6 l) ein. Zusätzlich wurde die Schüttdichte und der Feuchtigkeitsgehalt ermittelt.

Anschließend wurden die Töpfe so über Auffanggefäße fixiert, daß unten auslaufendes Wasser aufgefangen und dessen Menge bestimmt werden konnte. Danach wurde jeweils nach Ablauf einer Stunde 500 cm$^3$ destilliertes Wasser gleichmäßig auf die Oberfläche der Erde-Mischungen verteilt aufgegeben und nach jeweils 45 Minuten durch Wägung die Wassermenge be-stimmt, die in den verschiedenen Erdemischungen festgehalten bzw. gespeichert worden war. Die Ergebnisse gehen aus der folgenden Tabelle hervor:

| | Schütt-dichte | Feuchtig-keitsgeh.% | gespeichertes Wasser-volumen nach der | | | | |
|---|---|---|---|---|---|---|---|
| | | | 1., | 3, | 6, | 10., | 12. |
| | | | Wasserzugabe(Vol%) | | | | |
| Einheitserde (100 %) | 425 | 32,9 | 5,7 | 15,3 | 21,8 | 29,5 | 29,7 |
| Erde/Schaum A/B | | | | | | | |
| Vol-Verhältnis 3:1 | 322 | 26,2 | 5,2 | 19,3 | 30,0 | 36,0 | 36,4 |
| Vol-Verhältnis 1:1 | 219 | 19,6 | 6,1 | 21,5 | 34,1 | 37,4 | 38,6 |
| Erde/Torf | | | | | | | |
| Vol-Verhältnis 3:1 | 354 | 37,4 | 4,1 | 9,7 | 18,5 | 31,8 | 37,0 |
| Vol-Verhältnis 1:1 | 270 | 41,9 | 3,8 | 9,2 | 18,5 | 32,5 | 37,2 |
| Erde/Harnstoffschaum | | | | | | | |
| Vol-Verhältnis 3:1 | 336 | 42,7 | 3,3 | 14,2 | 24,3 | 29,9 | 30,1 |
| Vol-Verhältnis 1:1 | 248 | 52,5 | 2,9 | 12,5 | 20,2 | 24,1 | 24,5 |

- 9 -

Die Tabelle zeigt, daß durch den erfindungsgemäßen Zusatz des Phenolformaldehydharzschaums Mischungen mit den geringsten Schüttdichten, den größten Wasseraufnahmegeschwindigkeiten und den höchsten Wasserspeicherfähigkeiten erhalten werden.

Beispiel 3

Das gemäß Beispiel 1 hergestellte Schaumstoffgranulat aus dem Schäumen A und B wurde während 24 Stunden bei ca. 80 °C getempert. Das resultierende Schaumstoffgranulat wird im folgenden mit T bezeichnet. Weiterhin wurde eine Probe des gemäß Beispiel 1 hergestellten Schaumstoffgranulats einem $NH_3$-Gasstrom von ca. 2,0 g $NH_3$/kg Schaum ausgesetzt. Die Behandlung wurde so lange fortgesetzt, bis das Eluat einer Schaumprobe einen pH-Wert zwischen 5,8 und 6,0 aufwies. Ein solches Schaumstoffgranulat wird im folgenden mit N bezeichnet.

Die Granulate T und N sowie die unbehandelten Schaumstoffgranulate A/B wurden mit Landerde im Verhältnis 1:1 und 1:3 vermischt und die Mischungen in Pflanzschalen gefüllt. In diese Erdemischungen wurde Samen von Rotkohl und Kresse gegeben und das Aufgehen des Samens beobachtet. Die Erdemischung wurde in einem Gewächshaus bei 20 °C leicht schattiert aufgestellt und durch Gießen im Abstand von 1 bis 2 Tagen normal feucht gehalten. In allen Mischungen gingen nach 3 bis 4 Wochen zwischen 80 und 85 % des Samens an; die Sämlinge wuchsen in den ersten drei bis vier Wochen relativ langsam mit Ausnahme derjenigen Sämlinge, die in der Erdemischung mit dem Granulat N (im Verhältnis 1:1) aufgegangen waren; in dieser Mischung war das Wachstum mit "gut" zu bezeichnen. Nach 8 bis 12 Wochen Wachstum hatten alle herangewachsenen Pflanzen ein gutes bis sehr gutes Aussehen.

0046855

Ähnliche Ergebnisse wurden erhalten, wenn anstelle des Rotkohl-Samens Rotkohl-Jungpflanzen in die genannten Erde/Schaumgemische gepflanzt wurden.

In einer weiteren Versuchsreihe wurden Primel-Jungpflanzen in den Erde/Schaumgemischen angepflanzt und wie oben beschrieben aufgezogen. Die Ergebnisse gehen aus folgender Tabelle 3 hervor:

| Granulat type | Volumen-Verhältnis Erde/Granulat | Angewachsen (%) | Wachstum nach 3-4 Wochen | Pflanzenqualität nach 8-12 Wochen |
|---|---|---|---|---|
| A/B | 3:1 | 60 | mangelhaft | mangelhaft |
|  | 1:1 | 100 | gut | sehr gut |
|  | 1:3 | 100 | gut | sehr gut |
| T | 3:1 | 90 | mangelhaft | mangelhaft |
|  | 1:1 | 80 | ausreichend | gut |
|  | 1:3 | 80 | gut | sehr gut |
| N | 3:1 | 100 | gut | sehr gut |
|  | 1:1 | 100 | gut | sehr gut |
|  | 1:3 | 100 | gut | sehr gut |

Aus der Tabelle 3 geht hervor, daß die unbehandelten Schaumstoffgranulate die Wachstumsbedingungen für Primeln verbessern, wenn die Granulate einer Landerde im Verhältnis 1:1 oder darüber untergemischt sind. Weiterhin geht aus dieser Tabelle hervor, daß die Nachbehandlung des Schaums mit gasförmigem Ammoniak zur Bindung der anhaftenden Säure von Vorteil für das Wachstum von Primeln ist.

Ähnliche Ergebnisse wie mit den Primel-Jungpflanzen wurden erhalten, wenn man Geranien-Stecklinge in den genannten Schaum/Erde-Gemischen aufzog. Das Wachstum in dem Gemisch aus Erde und dem mit Ammoniak nachbehandelten Schaum war auch dort erheblich besser als in den Erde/Schaumgemischen,

bei denen der Schaum nicht nachbehandelt war.

Weiterhin wurden Stecklinge von Fuchsien in den beschriebenen Erde/Schaumgemischen aufgezogen. Auch hier sind die Ergebnisse analog denjenigen, die mit Primel-Jungpflanzen erhalten wurden, wie aus der folgenden Tabelle 4 hervorgeht:

| Schaum-<br>type | Volumen-<br>Verhältnis<br>Erde/Schaum | Angewachsen<br>(%) | Wachstum<br>nach<br>3-4 Wochen | Pflanzen-<br>qualität nach<br>8-12 Wochen |
|---|---|---|---|---|
| A/B | 3:1 | 100 | ausreichend | gut bis sehr gut |
|  | 1:1 | 100 | gut | sehr gut |
| T | 3:1 | 80 | ausreichend | ausreichend |
|  | 1:1 | 100 | gut | sehr gut |
| N | 3:1 | 100 | gut | sehr gut |
|  | 1:1 | 100 | gut | sehr gut |

Beispiel 4

Für die folgenden Versuche wurde eine Landerde verwendet, die mit einem im Handel erhältlichen Präparat (Terabol) entseucht war und die auf 1000 Vol.-Teilen 2,5 g eines im Handel erhältlichen Volldüngers (Plantosan 4 D) untergemischt enthielt. Diese Erde wurde mit Schaumstoffgranulaten entsprechend Beispiel 1 im Volumenverhältnis 1:1 vermischt. Die Granulate wurden für die jeweiligen Versuchsreihen behandelt a) mit 12,5 Vol.-% einer gesättigten wässrigen Lösung von Calciumcarbonat, b) mit 1 Vol.-% einer gesättigten wässrigen Lösung von $Ca(OH)_2$ und c) mit 3,5 Vol.-% einer 10 %igen wässrigen Ammoniaklösung. Im Fall c) wurde dadurch der pH-Wert des Granulats von 4,1 auf etwa 5,3 erhöht.

Die Erde/Schaumstoffmischungen wurden in Pflanzschalen gefüllt, in denen Schnittlauch aus Samen und Geranien-Stecklinge aufgezogen wurden. Die Schalen wurden in einem

- 12 -

Gewächshaus bei 15 °C ohne Schattierung untergebracht und durch tägliches Gießen normal feucht gehalten. Zum Vergleich wurden die gleichen Pflanzen in der verwendeten Landerde ohne den Zusatz von Schaumstoffgranulat kultiviert. Die Ergebnisse gehen aus der Tabelle 5 hervor:

| | Pflanzenbeurteilung in Gemisch aus Erde mit | | | | |
| | ohne Zusatz | unbehand. Schaum | Schaum + $CaHCO_3$ | Schaum + $Ca(OH)_2$ | Schaum + $NH_4OH$ |
|---|---|---|---|---|---|
| Schnittlauch | | | | | |
| n. 4 Wochen | 3 | 3 | 3 | 3 | 2 |
| n. 12 Wochen | 3 | 5 | 5 | 4 | 3 |
| Geranien | | | | | |
| n. 4 Wochen | 3 | 3 | 3 | 2 | 3 |
| n. 12 Wochen | 3 | 3 | 2 | 2 | 2 |

Bedeutung der Ziffern: 1=sehr gut, 2=gut, 3=befriedigend, 4=ausreichend, 5=mangelhaft,6=ungenügend. Bei Werten von 4 und höher ist die Erde bzw. das Gemisch aus Erde und Schaumstoff für eine erfolgreiche Kultivierung nicht mehr verwendbar.

Patentansprüche:

1. Verwendung von Bruchstücken von offenporigen Phenolharzschäumen, die eine Dichte zwischen 9 und 25 kg/m$^2$, einen Anteil an offenen Poren von mehr als 80 % und einen durchschnittlichen Zellendurchmesser zwischen 0,15 und 0,5 mm besitzen, als Zuschlagmittel zur Verbesserung des Wasser- und Lufthaushalts von Kulturböden.

2. Verwendung offenporiger Phenolharzschäume gemäß Anspruch 1, die vor ihrem Einsatz mit gasförmigem Ammoniak oder mit wässrigen Lösungen basisch wirkender Verbindungen behandelt wurden.

3. Verwendung offenporiger Phenolharzschäume gemäß Anspruch 1 oder 2 in Mengen bis zu 1000 Vol.-%, bezogen auf das Volumen des Kulturbodens.

4. Verwendung offenporiger Phenolharzschäume gemäß einem der Ansprüche 1 bis 3 in Korngrößen zwischen 1 und 60 mm, vorzugsweise zwischen 4 und 40 mm.

5. Kulturböden, bei denen der Wasser- und Lufthaushalt durch Zusatz leichter und saugfähiger Substanzen verbessert ist, gekennzeichnet durch einen Gehalt an Bruchstücken von offenporigen Phenolharzschäumen, die eine Dichte zwischen 9 und 25 kg/m$^2$, einen Anteil an offenen Poren von mehr als 80 Vol.-% und einen durchschnittlichen Zellendurchmesser zwischen 0,15 und 0,5 mm besitzen.

6. Kulturböden gemäß Anspruch 5, dadurch gekennzeichnet, daß die Schaumstoff-Bruchstücke Korngrößen zwischen 1 60 mm, vorzugsweise zwischen 4 und 10 mm besitzen.

7. Kulturböden gemäß Anspruch 5 oder 6, gekennzeichnet durch einen Gehalt bis zu 1000 Vol.-% an Schaumstoff-Bruchstücken.

Europäisches
Patentamt

# EUROPÄISCHER RECHERCHENBERICHT

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | A 01 G 1/00 C 09 K 17/00 |
| | BE - A - 643 755 (BASF)<br>* Seite 2, Absatz 2 *<br><br>-- | 1,5 | |
| | US - A - 3 110 129 (BAUMANN)<br>* Insgesamt *<br><br>-- | 1,5 | |
| | DE - A - 1 542 831 (BASF)<br>* Seite 5, Absatz 2 - Seite 6, Absatz 4 *<br><br>-- | 1,2,4-6 | |
| | DE - A - 2 827 524 (DYNAMIT NOBEL)<br>* Seite 5, Absatz 2 - Seite 7, Absatz 2 *<br><br>---- | 1,2,5 | |

**RECHERCHIERTE SACHGEBIETE (Int. Cl.³)**

A 01 G 1/00
9/10
C 09 K 17/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent- familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 03-12-1981 | HERYGERS |

EPA form 1503.1 06.78